# EUROPÄISCHE PATENTSCHRIFT

(11) **EP 4 359 744 B1**
(45) Veröffentlichungstag und Bekanntmachung des Hinweises auf die Patenterteilung: **22.01.2025**
(21) Anmeldenummer: 22738659.6
(22) Anmeldetag: 04.07.2022
(51) Int. Cl.: G01K 13/02, G01K 1/143, G01K 1/18, G01K 7/42, G01K 1/08, G01K 15/00

(54) **TEMPERATURMESSVORRICHTUNG ZUR NICHTINVASIVEN TEMPERATURMESSUNG, KALIBRIERVERFAHREN UND COMPUTERPROGRAMMPRODUKT**
TEMPERATURE MEASURING DEVICE FOR NON-INVASIVE TEMPERATURE MEASUREMENT, CALIBRATION METHOD, AND COMPUTER PROGRAMME PRODUCT
DISPOSITIF DE MESURE DE TEMPÉRATURE POUR LA MESURE DE TEMPÉRATURE NON INVASIVE, PROCÉDÉ D'ÉTALONNAGE ET PRODUIT DE PROGRAMME INFORMATIQUE

(30) Priorität: 24.08.2021 DE 102021209278
(43) Veröffentlichungstag der Anmeldung: 01.05.2024
(73) Patentinhaber: Siemens Aktiengesellschaft, 80333 München (DE)
(72) Erfinder: BIERWEILER, Thomas, 76297 Stutensee (DE); ENS, Wolfgang, 76351 Linkenheim (DE); HILSENDEGEN, Markus, 76187 Karlsruhe (DE); RIGONI, Valentin, 67590 Wintershouse (FR); SCHERER, Tim, 76185 Karlsruhe (DE); VON DOSKY, Stefan, 76149 Karlsruhe (DE)
(74) Vertreter: Siemens Patent Attorneys
(86) Internationale Anmeldenummer: PCT/EP2022/068427
(87) Internationale Veröffentlichungsnummer: WO 2023/025443

(56) Entgegenhaltungen:
- WO-A2-2014/018798
- DE-U1- 202010 013 086
- FR-A1- 2 252 566
- JP-A- S61 260 193
- US-A1- 2007 237 202
- US-A1- 2010 327 849
- US-A1- 2018 010 978
- US-A1- 2020 103 287
- ANONYMOUS N T: "ABB Measurement & Analytics | White Paper - TSP341-N Hochpräzise nicht-invasive Temperaturmessung", ABB CORPORATE WEBSITE, 27 June 2019 (2019-06-27), Brown-Boveri-Str. 3, 2351 Wr. Neudorf, Österreich [AT], pages 1 - 24, XP055971000, Retrieved from the Internet <URL:https://library.e.abb.com/public/2e48cd95756e4fa68f7badea46c1f3da/WP_TSP341-N_101_DE_E01.pdf> [retrieved on 20221013]
- ANONYMOUS: "ABB Measurement & Analytics | Datenblatt - TSP341-N Temperaturfühler zur nicht-invasiven Temperaturmessung", ABB CORPORATE WEBSITE, 27 June 2019 (2019-06-27), Brown-Boveri-Str. 3, 2351 Wr. Neudorf, Österreich [AT], pages 1 - 16, XP055971010, Retrieved from the Internet <URL:https://search.abb.com/library/Download.aspx?DocumentID=DS%2fTSP341-N-DE&LanguageCode=de&DocumentPartId=&Action=Launch> [retrieved on 20221013]
- GEBHARDT JÖRG ET AL: "Non-invasive temperature measurement of turbulent flows of aqueous solutions and gases in pipes", TM - TECHNISCHES MESSEN/PLATTFORM FÜR METHODEN, SYSTEME UND ANWENDUNGEN DER MESSTECHNIK, vol. 87, no. 9, 25 September 2020 (2020-09-25), DE, pages 553 - 563, XP055806729, ISSN: 0171-8096, Retrieved from the Internet <URL:http://dx.doi.org/10.1515/teme-2020-0028> [retrieved on 20230224], DOI: 10.1515/teme-2020-0028

## Beschreibung

Die Erfindung betrifft eine Temperaturmessvorrichtung zur nichtinvasiven Temperaturmessung. Genauso betrifft die Erfindung ein Verfahren zum Kalibrieren einer Temperaturmessvorrichtung. Die Erfindung betrifft ebenso ein Computerprogrammprodukt.

In der Patentanmeldung FR 2 252 566 A1 offenbart eine Temperaturmessvorrichtung, die einen Temperaturfühler umfasst, der im montierten Zustand mit einer Rohrwandung in thermisch leitendem Kontakt steht. Der Temperaturfühler ist mit einer Auswertungseinheit gekoppelt, die dazu ausgebildet ist, basierend auf einem vom Temperaturfühler erfassten Messwert eine Fluidtemperatur im Rohr zu ermitteln.

Aus der Druckschrift US 2020/0103287 A1 ist eine nichtinvasive Temperaturmesseinrichtung bekannt, die Temperaturfühler umfasst, die in einer Hülse eine Rohrwandung kontaktieren. Die Hülse weise eine rohrseitige Spitze auf, die flach oder konkav ausgebildet ist.

Die Internationale Anmeldung WO 2015/099933 A1 offenbart eine Temperaturmesseinrichtung zur nichtinvasiven Temperaturmessung, die auf einem Rohr befestigbar ist. Die Temperaturmesseinrichtung weist zwei Temperatursensoren auf, die als Widerstandsthermometer ausgebildet sind und auf einer Grundstruktur auf dem Rohr angebracht sind. Die Temperatursensoren sind in einem Sensorröhrchen aufgenommen, das an einem dem Rohr zugewandten Ende offen ist.

Aus WO 2015/135739 A1 ist ein Messsystem bekannt, das zum Messen einer Temperatur eines Fluids in einem Rohr dient. Das Messsystem umfasst zwei Temperaturfühler, von denen ein erster über einen Kopplungskörper mit dem Rohr in thermischem Kontakt steht. Der zweite Temperaturfühler ist über einen weiteren Kopplungskörper thermisch mit dem ersten Temperaturfühler gekoppelt. Die Temperaturfühler weisen einen Platin-Messwiderstand auf.

Die Druckschrift WO 2019/063519 A1 zeigt eine Temperaturmesseinrichtung, mit der eine Temperatur eines Fluids in einem Rohr zu messen ist. Die Temperaturmesseinrichtung weist einen Referenzsensor und einen Messsensor auf. Diese sind, bezogen auf das Rohr, in unterschiedlichen Radialpositionen angeordnet und von einer Isolationsschicht umgeben.

In einer Vielzahl an Anwendungen, beispielsweise der Prozessautomatisierung, besteht ein zunehmender Bedarf an Temperaturmesstechnik zur Steuerung technischer Prozesse. Insbesondere besteht Bedarf an Möglichkeiten zur nichtinvasiven Temperaturmessung von Fluiden in Rohren. Es werden hierbei steigende Anforderungen in Sachen Messgenauigkeit, Zuverlässigkeit, mögliche Temperaturspanne und Montagefreundlichkeit gestellt. Der Erfindung liegt die Aufgabenstellung zugrunde, eine Möglichkeit zur nichtinvasiven Temperaturmessung bereitzustellen, die in zumindest einem der skizzierten Aspekte eine Verbesserung bietet.

Die Aufgabenstellung wird durch eine erfindungsgemäße Temperaturmessvorrichtung gelöst, die zu einem nichtinvasiven Messen einer Temperatur eines Mediums in einem Rohr ausgebildet ist. Das Medium kann eine Flüssigkeit, ein Gas, ein Dampf oder ein Gemisch hieraus sein, die durch das Rohr, also einen geschlossenen Querschnitt, umschlossen ist. Die Temperaturmessvorrichtung umfasst dazu einen ersten und einen zweiten Temperatursensor, die jeweils zu einem separaten Erfassen einer Temperatur geeignet sind. Der erste und zweite Temperatursensor sind in einer Hülse aufgenommen. Durch die Hülse werden der erste und zweite Temperatursensor gegen Einwirkungen aus der Umgebung, insbesondere thermische Einwirkungen, geschützt. Erfindungsgemäß weist die Hülse einen Abschluss auf, durch den die Hülse an einem Ende verschlossen ist. Der Abschluss ist dazu ausgebildet, in einem montierten Zustand der Temperaturmessvorrichtung, eine Wandung des Rohrs zu kontaktieren. Durch das Kontaktieren wird über den Abschluss ein thermischer Kontakt zwischen der Hülse und der Wandung des Rohrs hergestellt. Der die Wandung kontaktierende Abschluss der Hülse erlaubt einen definierten Wärmeübergang vom Rohr zu den Temperatursensoren. Der Abschluss weist eine reduzierte Fläche auf, die definiert an der Wandung anliegt, woraus sich ein Wärmeübergang ergibt, der nur einem Minimum an Störeinflüssen unterworfen ist. Dies wiederum erlaubt eine präzise nichtinvasive Temperaturmessung des Mediums im Rohr.

Bei der erfindungsgemäßen Temperaturmessvorrichtung weist der Abschluss der Hülse einen Abschnitt mit einer reduzierten Wandstärke auf. Der Abschnitt mit der reduzierten Wandstärke kontaktiert die Wandung des Rohrs im montierten Zustand. Durch die reduzierte Wandstärke weist der entsprechende Abschnitt des Abschlusses einen reduzierten Wärmeleitwiderstand auf. Dadurch wird eine verbesserte thermische Anbindung des ersten Temperatursensors an die Wandung des Rohrs hergestellt. Beispielsweise wirkt sich ein Temperaturanstieg der Wandung des Rohrs infolge des Abschnitts mit reduzierter Wandstärke schneller auf den ersten Temperatursensor auf. Unter einer reduzierten Wandstärke ist hierbei eine Wandstärke zu verstehen, die geringer ist als eine Wandstärke der Hülse, insbesondere in benachbarten Bereichen des Abschlusses der Hülse. Der Abschnitt mit der reduzierten Wandstärke verwirklicht folglich das Prinzip einer Wärmebrücke oder eines thermischen Fensters zwischen dem ersten Temperatursensor und der Wandung des Rohrs. Der Verzug beim Messen der Temperatur des Mediums wird so weiter reduziert.

In einer Ausführungsform der beanspruchten Temperaturmessvorrichtung wird der Abschluss der Hülse in einem montierten Zustand durch den ersten Temperatursensor kontaktiert. Der erste Temperatursensor ist hierbei in einem thermischen Kontakt mit dem Abschluss der Hülse angeordnet. Alternativ ist der erste Temperatursensor mit dem Abschluss der Hülse in einem mittelbaren thermischen Kontakt, wobei zwischen dem ersten Temperatursensor und dem Abschluss ein minimierter Wärmeleitwiderstand vorliegt. Infolgedessen ist eine Temperaturänderung am Abschluss der Hülse mit reduziertem Verzug oder nahezu verzugsfrei durch den ersten Temperatursensor erfassbar. Eine Temperaturänderung des Mediums im Rohr führt zu einer Temperaturänderung in der Wandung des Rohrs. Die beanspruchte Temperaturmessvorrichtung setzt in ihrem Messprinzip mit der Temperatur der Wandung an der physikalischen Größe an, die der zu messenden Temperatur des Mediums am schnellsten folgt. Dadurch wird, im Rahmen einer nichtinvasiven Temperaturmessung, ein gesteigertes Maß an Direktheit bei der Messung erreicht. Demzufolge dient das Kontaktieren des Abschlusses durch den ersten Temperatursensor einer Reduzierung eines Verzugs bei der Messung der Temperatur des Mediums.

Ferner kann eine Außenfläche des Abschlusses der Hülse, die in einem montierten Zustand der Temperaturmessvorrichtung an der Wandung des Rohrs anliegt, konvex oder eben ausgebildet sein. Über die konvexe bzw. ebene Außenfläche, die als Kontaktfläche dient, erfolgt ein thermisches Kontaktieren des Abschlusses der Hülse mit der Wandung des Rohrs. Das Rohr kann selbst konvex ausgebildet sein und einen erheblich grö-ßeren Radius aufweisen als die Außenfläche des Abschlusses der Hülse. Durch die konvexe bzw. ebene Form ist stets ein thermischer Kontakt zwischen einem mittigen Bereich der Außenfläche und der Wandung herstellbar. Aufgrund der Größenverhältnisse an der Außenfläche und der Wandung ist ein Randbereich der Außenfläche, in dem die Wandung nicht kontaktiert wird, minimiert. Ein aufwendiges Anpassen einer konkaven Form der Außenfläche an die konvexe Form des Rohrs ist so entbehrlich. Ebenso sind thermisch koppelnde Zwischenschichten, beispielsweise aus Wärmeleitpaste, entbehrlich. Insbesondere kann ein Abschnitt der Hülse mit minimierter Wandstärke in einem mittigen Bereich der Außenfläche ausgebildet sein, so dass dieser bei einer ebenen oder konvexen Form der Außenfläche mit der Wandung des Rohrs thermisch kontaktierbar ist. Die konvexe Form umfasst hierbei sowohl eine einachsig gewölbte Außenfläche als auch eine synklastische Außenfläche. Insgesamt ist die beanspruchte Temperaturmessvorrichtung bei einer breiten Spanne an Rohren ohne Einbußen bei der Güte der Messgenauigkeit einsetzbar.

In einer weiteren Ausführungsform der beanspruchten Temperaturmessvorrichtung ist die Hülse in einer vom Rohr im Wesentlichen radial abstehenden Halterung lösbar aufgenommen. Die Halterung kann dabei über Schellen oder Schnallen mit dem Rohr verbunden sein. Des Weiteren kann die Halterung zur Hülse an axial beanstandeten Bereichen am Rohr befestigt sein. Dadurch werden thermische Störeinwirkungen auf einen Bereich, in dem die Wandung des Rohrs durch die Hülse thermisch kontaktiert ist, minimiert. Die Halterung stellt für die Hülse eine Verankerung dar, aus der sie zerstörungsfrei lösbar ist. Die Hülse ist durch die Halterung vor mechanischen Einwirkungen geschützt. Ferner ist die Hülse der Halterung entnehmbar und kann separat inspiziert, repariert oder kalibriert werden. Dadurch, dass die Halterung am gleichen Ort verbleibt, ist nach einer erneuten Montage ein Auftreten eines Messfehlers durch eine Neupositionierung der Temperaturmessvorrichtung ausgeschlossen. Darüber hinaus wird so die Wartungsfreundlichkeit der Temperaturmessvorrichtung gesteigert, insbesondere durch die Austauschbarkeit der Hülse mit den Temperatursensoren. Ebenso werden im Betrieb notwendige Rekalibrierungen der Temperatursensoren vereinfacht. Die im Wesentlichen radial vom Rohr abstehende Halterung dient folglich einer Vereinfachung der Kalibrierung der Temperaturmessvorrichtung, und somit einem dauerhaft präzisen Betrieb.

Des Weiteren kann in der Hülse ein thermischer Isolator aufgenommen sein, durch den ein Wärmestrom zwischen dem ersten und/oder zweiten Temperatursensor und der Hülse minimiert wird. Der thermische Isolator kann hierbei ein Gas, ein Gasgemisch, beispielsweise Luft, ein mineralischer Stoff wie Perlit oder Mineralwolle oder Aerogel sein. Ein über die Hülse zum ersten Temperatursensor geleiteter Wärmestrom erreicht so im Wesentlichen streuverlustfrei den zweiten Temperatursensor. Darüber hinaus wird durch den thermischen Isolator eine Störeinwirkung aus der Umgebung auf die Temperatursensoren reduziert, wodurch eine gesteigerte Messgenauigkeit erzielbar ist.

In einer weiteren Ausführungsform der beanspruchten Temperaturmessvorrichtung können der erste und zweite Temperatursensor an einem Sensorträger befestigt sein. Der Sensorträger kann dabei im Wesentlich stabförmig ausgebildet sein und auch in der Hülse aufgenommen sein. Der erste und zweite Temperatursensor können am Sensorträger zueinander radial beabstandet angeordnet sein. Demzufolge stellt sich im Betrieb der Temperaturmessvorrichtung ein Wärmestrom vom ersten zum zweiten Temperatursensor ein, der über den Sensorträger fließen kann. Alternativ kann auch über ein thermisches Kopplungsmittel, beispielsweise einem Draht, zwischen dem ersten und zweiten Temperatursensor eine thermische Kopplung erfolgen, also eine thermisch leitende Verbindung hergestellt sein. Zwischen dem ersten und zweiten Temperatursensor wird insgesamt ein Wärmeleitwiderstand definiert, anhand dessen und von Messwerten der Temperatursensoren die Temperatur des Mediums ermittelbar ist. Der Sensorträger ist in einfacher Weise mit erhöhter Präzision herstellbar, so dass dessen Wärmeleitwiderstand exakt bestimmbar ist, und infolgedessen eine präzise Temperaturmessung erzielbar ist. Ferner kann der Sensorträger durch eine Rückstellkraft eines elastischen Elements, beispielsweise eine Feder, gegen den Abschluss der Hülse gedrückt werden. Dadurch ist in einfacher Weise eine gezielte thermische Kopplung zwischen dem Sensorträger und der Hülse erreichbar.

Ferner kann in der beanspruchten Temperaturmessvorrichtung der erste und/oder zweite Temperatursensor an einem dem Rohr, und damit auch dem Abschluss, abgewandten Ende fest mit einer Messumformeranbindung verbunden sein. Insbesondere können der erste und/oder zweite Temperatursensor als Widerstandsthermometer, insbesondere Platin-Widerstandsthermometer, ausgebildet sein. Über die Messumformeranbindung sind der erste und/oder zweite Temperatursensor elektrisch angebunden, so dass aus Spannungs- oder Stromstärke-Messwerten der im jeweiligen Temperatursensor vorliegende elektrische Widerstand ermittelbar ist. Infolgedessen ist ein Messumformer der beanspruchten Temperaturmessvorrichtung in einfacher Weise austauschbar. Dies erlaubt bei der Herstellung eine separate Funktions- und Qualitätsprüfung der Messumformer, die an der Messumformeranbindung anzubringen sind. Dadurch sind defekte oder qualitativ unzureichende Messumformer frühzeitig erkennbar und damit fehlerhafte Temperaturmessvorrichtungen einfach vermeidbar. Ebenso wird ein Austausch des Messumformers so vereinfacht. Die Funktions- und Qualitätsprüfung ist dadurch vom sonstigen Herstellungsprozess separierbar, was die Herstellung der beanspruchten Temperaturmessvorrichtung einfacher und wirtschaftlicher macht.

Darüber hinaus können in der beanspruchten Temperaturmessvorrichtung die Temperatursensor in einem vom Rohr abgewandten Abschnitt mittelbar oder unmittelbar mit einem Gehäuse verbunden sein. Der erste und/oder zweite Temperatursensor können dabei im Wesentlichen stabförmig ausgebildet sein. Im Gehäuse ist ein Messumformer angeordnet, der mit der Messumformeranbindung gekoppelt ist. Hierbei ist das Gehäuse lösbar, also zerstörungsfrei lösbar, beispielsweise über einen Bajonettverschluss, mit der Halterung verbunden. Das Gehäuse mit dem Messumformer und den Temperatursensoren ist folglich als Modul von der Halterung lösbar und kann zumindest teilweise in ein Kalibrierbad eingetaucht werden, um so eine Rekalibrierung der Temperaturmessvorrichtung vorzunehmen. Ebenso ist die Temperaturmessvorrichtung als Ganzes austauschbar. Durch ein Bereitstellen von geeigneten Parametern ist die Temperaturmessvorrichtung ersetzbar, wodurch in einer Anwendung, beispielsweise einer Automatisierungsanlage, Ausfallzeiten reduzierbar sind.

Die eingangs beschriebene Aufgabe wird ebenso durch ein erfindungsgemäßes Verfahren zum Kalibrieren einer Temperaturmessvorrichtung gelöst. Die Temperaturmessvorrichtung ist zu einer nichtinvasiven Messung einer Temperatur eines Mediums in einem Rohr ausgebildet und umfasst hierzu ein Gehäuse mit einem darin aufgenommenen Messumformer. An den Messumformer sind ein erster und ein zweiter Temperatursensor angeschlossen, die wiederum in einer Hülse aufgenommen sind. Die Hülse ist mit dem Gehäuse verbunden. Das Verfahren umfasst einen ersten Schritt, in dem das Gehäuse mitsamt der damit verbundenen Hülse von einer im Wesentlichen radial vom Rohr wegstehenden Halterung gelöst wird. Dazu ist beispielsweise ein Bajonettverschluss an der Halterung lösbar. Die Radialrichtung, in der die Halterung absteht, ist hierbei auf das Rohr bezogen. In einem darauffolgenden zweiten Schritt wird die Hülse zumindest teilweise in ein Kalibrierbad, beispielsweise mit Sand, Wasser oder Öl, eingetaucht. Dadurch ist die Hülse einer definierten Temperatur unterworfen. An der Hülse ist somit eine Kalibriermessung durchgeführt. Anhand der Kalibriermessung wiederum können Parameter für die Temperaturmessvorrichtung ermittelt werden. Derartige Parameter können bei als Platin-Widerstandsthermometer ausgebildeten Temperatursensoren beispielsweise Koeffizienten einer Callendar-van-Dusen-Gleichung sein. Es folgt ein dritter Schritt, in dem der Messumformer in Abhängigkeit von der Kalibriermessung, also vom dabei erzielten Ergebnis, eingestellt wird. Hierzu können beispielsweise aus der Kalibriermessung gewonnene Parameter dem Messumformer vorgegeben werden. Dies kann durch eine Benutzereingabe und/oder eine Automatikfunktion erfolgen. Insgesamt wird hierbei das Resultat der Kalibriermessung auf die Temperaturmessvorrichtung übertragen. In einem daran anschließenden vierten Schritt wird das Gehäuse mit der daran angebrachten Hülse wieder an der Halterung befestigt. Dazu kann beispielsweise der Bajonettverschluss an der Halterung wieder eingerastet werden. Die Temperaturmessvorrichtung ist durch den vierten Schritt wieder funktionsbereit, also dazu eingerichtet, die Temperatur des Mediums im Rohr zu messen.

Die Hülse der Temperaturmessvorrichtung weist hierbei einen Abschluss auf und ist durch diesen an einem Ende verschlossen. Im vierten Schritt wird der Abschluss an der Hülse mit einer Wandung des Rohrs, bei dem die Temperatur des darin befindlichen Mediums zu messen ist, in einen thermisch leitenden Kontakt gebracht. Der Abschluss der Hülse wird im vierten Schritt mit der Wandung des Rohrs in Kontakt gebracht und im Wesentlichen in dieser Position gehalten. Über den Abschluss der Hülse wird ein definierter Wärmestrom zum ersten Temperatursensor gewährleistet, der eine präzise Ermittlung der Temperatur des Mediums erlaubt. Das erfindungsgemäße Verfahren ist schnell durchführbar und ist nur minimalen Störeinwirkungen unterworfen. Die Montage des Gehäuses an der Halterung gewährleistet ein erhöhtes Maß an Positionsgenauigkeit für die Temperatursensoren und die Hülse. Weitergehende Anpassungen, die durch eine Neupositionierung der Temperatursensoren an einem Rohr notwendig werden können, sind beim erfindungsgemäßen Verfahren prinzipbedingt unnötig. Das Kalibrieren der Temperaturmessvorrichtung ist folglich zuverlässig und präzise durchführbar.

In einer Ausführungsform des beanspruchten Verfahrens ist die Temperaturmessvorrichtung gemäß einer der oben skizzierten Ausführungsformen ausgebildet. Die technischen Vorzüge der beanspruchten Temperaturmessvorrichtung werden so auch beim Kalibrieren dieser erreicht. Insbesondere ist nach einem derartigen Kalibrieren mit der beanspruchten Temperaturmessvorrichtung eine erhöhte Messgenauigkeit und ein verringerter Verzug bei Messungen der Temperatur des Mediums im Rohr erreichbar. Der Vorteil der einfachen Kalibrierung wird bei den beanspruchten Temperaturmessvorrichtungen in besonders wirtschaftlicher Weise erzielt. Darüber hinaus werden die Temperatursensoren durch die Hülse von mechanischen Einwirkungen aus der Umgebung geschützt, wodurch das beanspruchte Verfahren auch im Zuge einer Wartung in einer Automatisierungsanlage durchführbar ist. Die Merkmale der beanspruchten Temperaturmessvorrichtung sind deshalb ohne Weiteres auf das beanspruchte Verfahren übertragbar.

Ferner wird die zugrundeliegende Aufgabe durch ein erfindungsgemäßes Computerprogrammprodukt gelöst, das zu einem Simulieren eines Betriebsverhaltens einer Temperaturmessvorrichtung ausgebildet ist. Das Computerprogrammprodukt umfasst Befehle, die bei der Ausführung des Computerprogrammprodukts durch einen Computer diesen veranlassen, das Betriebsverhalten der Temperaturmessvorrichtung zu simulieren. Die zu simulierende Temperaturmessvorrichtung ist dazu ausgebildet, die Temperatur eines Mediums in einem Rohr zu messen, auf dem die Temperaturmessvorrichtung in einem montierten Zustand montiert ist. Erfindungsgemäß ist die zu simulierende Temperaturmessvorrichtung gemäß einer der oben skizzierten Ausführungsformen ausgebildet. Das Computerprogrammprodukt kann zur Simulation über ein Physik-Modul verfügen, in dem das Temperaturmessvorrichtung zumindest teilweise abgebildet ist. Hierzu kann beispielsweise die Temperaturmessvorrichtung in ihrem baulichen Aufbau und Funktionsweise nachgebildet sein. Alternativ oder ergänzend kann die Temperaturmessvorrichtung auch als Rechenmodell im Physik-Modul ausgebildet sein. Das Physik-Modul ist dazu ausgebildet, unter anderem das thermische Verhalten der Temperaturmessvorrichtung unter einstellbaren Betriebsbedingungen nachzustellen. Zu den einstellbaren Betriebsbedingungen gehören beispielsweise eine Umgebungstemperatur, eine Temperatur des Mediums im Rohr, eine Wärmeleitfähigkeit des Mediums, der Wandung des Rohrs, der Hülse, des thermischen Kopplungselements und/oder des Sensorträgers, eine Fließgeschwindigkeit des Mediums und/oder ein thermisches Expansionsverhalten einer Komponente der Temperaturmessvorrichtung.

Das Computerprogrammprodukt kann über eine Datenschnittstelle verfügten, über die entsprechende Daten über eine Benutzereingabe und/oder andere simulationsgerichtete Computerprogramme vorgebbar sind. Ebenso kann das Computerprogrammprodukt über eine Datenschnittstelle zu einem Ausgeben von Simulationsresultaten an einen Benutzer und/oder andere simulationsgerichtete Computerprogrammprodukte verfügen. Mittels des Computerprogrammprodukts ist beispielsweise eine defekter Temperatursensor in der Temperaturmessvorrichtung selbst und/oder eine fehlerhafte Montage der Temperaturmessvorrichtung erkennbar. Des Weiteren ist die Temperaturmessvorrichtung in einfacher Weise modellierbar, also mit einem Minimum an Finite-Elemente-Berechnungen im Betriebsverhalten nachrechenbar. Insbesondere sind lediglich ein Wärmeübergang zwischen der Wandung des Rohrs und der Hülse und Wärmleitungen zum ersten bzw. zweiten Temperatursensor zu simulieren, um die Funktionsweise der Temperaturmessvorrichtung nachzustellen. Anderweitige Wärmeübergänge oder Wärmeleitungen sind im Wesentlichen vernachlässigbar. Das erfindungsgemäße Computerprogrammprodukt erlaubt somit eine Modellierung des zugrundeliegenden Temperaturmesssystems bei einem reduzierten Bedarf an Rechenleistung. Hierdurch ist auch eine Vielzahl an derartigen Temperaturvorrichtung beispielsweise in einer sogenannten Operator Station einer Automatisierungsanlage nachbildbar. Somit ist insgesamt in einfacher Weise ein besonders realitätstreues Prozessabbild bereitstellbar. Alternativ oder ergänzend kann das Computerprogrammprodukt auch in einer Auswertungseinheit der Temperaturmessvorrichtung ausgeführt werden.

Das Computerprogrammprodukt kann als sogenannter Digitaler Zwilling ausgebildet sein, wie beispielsweise in der Druckschrift US 2017/286572 A1 beschrieben. Das Computerprogrammprodukt kann monolithisch ausgebildet sein, also vollständig auf einer Hardwareplattform ausführbar. Alternativ kann das Computerprogrammprodukt modular ausgebildet sein und eine Mehrzahl an Teilprogrammen umfassen, die auf separaten Hardwareplattformen ausführbar sind und über eine kommunikative Datenverbindung zusammenwirken. Eine solche kommunikative Datenverbindung kann eine Netzwerkverbindung oder eine Internetverbindung sein. Ferner kann durch das erfindungsgemäße Computerprogrammprodukt eine Temperaturmessvorrichtung per Simulation erprobt und/oder optimiert werden.

Die Erfindung wird im Folgenden anhand einer Ausführungsform in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der Ausführungsform sind mit den oben skizzierten Merkmalen kombinierbar. Es zeigen im Einzelnen:
- FIG 1: eine erste Ausführungsform der beanspruchten Temperaturmessvorrichtung in einer längsgeschnittenen Schrägansicht;
- FIG 2: die erste Ausführungsform der beanspruchten Temperaturmessvorrichtung in einer längsgeschnittenen Detailansicht;
- FIG 3: die erste Ausführungsform der beanspruchten Temperaturmessvorrichtung in einem demontierten Zustand in einer längsgeschnittenen Schrägansicht.

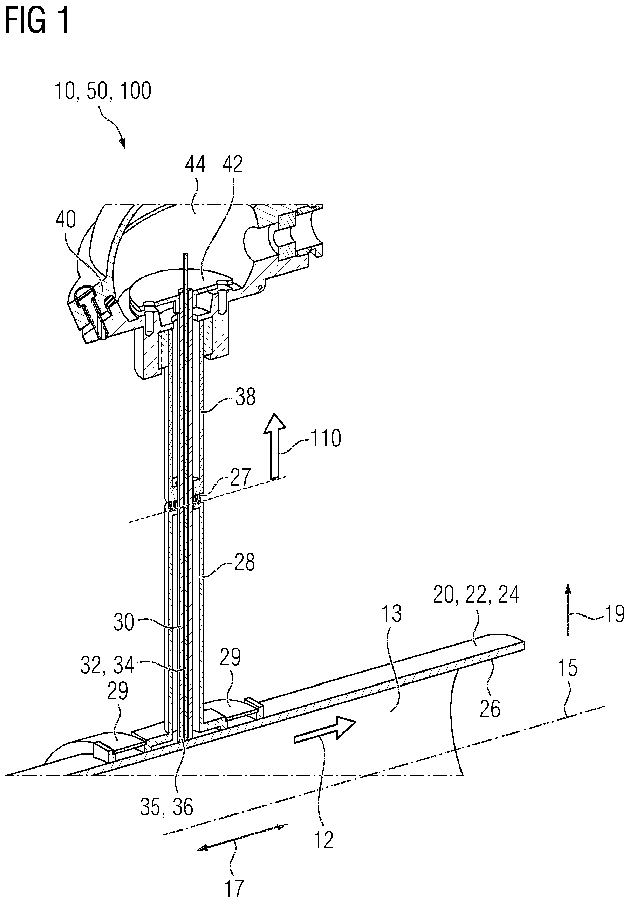

Eine erste Ausführungsform der beanspruchten Temperaturmessvorrichtung 10 ist in FIG 1 in einer längsgeschnittenen Schrägansicht in einem montierten Zustand gezeigt. Die Temperaturmessvorrichtung 10 ist über Befestigungsmittel 29 auf einer Außenseite 24 einer Wandung 22 eines Rohrs 20 befestigt. Im Inneren des Rohrs 20, also an einer Innenseite 26, befindet sich ein Medium 12, das eine Temperatur 13 aufweist, die durch die Temperaturmessvorrichtung 10 nichtinvasiv zu messen ist. Das Medium 12 fließt hierbei entlang einer Rohrachse 15, durch die auch eine Axialrichtung 17 und eine Radialrichtung 19 definiert sind. Die Temperatur 13 des Mediums 12 bewirkt eine Temperaturänderung an der Wandung 22 des Rohrs 20, die über die Temperaturmessvorrichtung 10 erfassbar ist. Die Temperaturmessvorrichtung 10 umfasst eine Halterung 28, die sich im Wesentlichen in Radialrichtung 19 vom Rohr 20 weg erstreckt und durch die Befestigungsmittel 29 fest mit dem Rohr 20 verbunden ist. In der Halterung 28 ist eine Hülse 30 angeordnet, in der ein erster und zweiter Temperatursensor 32, 34 aufgenommen sind. Der erste und zweite Temperatursensor 32, 34 sind jeweils als Widerstandsthermometer ausgebildet. Die Hülse 30 weist an einem dem Rohr 20 zugewandten Ende einen Abschluss 36 auf, durch den die Temperatursensoren 32, 34 von der Wandung 22 des Rohrs 20 getrennt werden. Am Abschluss 36 der Hülse 30 ist ein Kontaktbereich 35 ausgebildet, an dem die Hülse 35 die Wandung 22 des Rohrs 20 berührt und so einen thermischen leitenden Kontakt herstellt. Dadurch wird ein Wärmestrom von der Wandung 22 des Rohrs 20 auf den Abschluss 36 der Hülse 30 ermöglicht. Dieser Wärmestrom ist durch die Temperatursensoren 32, 34 erfassbar zu einem Ermitteln der Temperatur 13 des Mediums 12.

Die Hülse 30 erstreckt sich in Radialrichtung 19 über die Halterung 28 hinaus in eine Anschlusshülse 38. Die Anschlusshülse 38 ist über eine als Bajonettverschluss ausgebildete lösbare Verbindung 27 gekoppelt. Die Anschlusshülse 38 ist fest mit einem Gehäuse 40 verbunden, in der eine Messumformeranbindung 42 angeordnet ist. Die Messumformeranbindung 42 ist mit der Hülse 30 verbunden und mit den darin aufgenommenen Temperatursensoren 32, 34 verbunden. Durch die Messumformeranbindung 42 sind die Temperatursensoren 32, 34 mit einem nicht näher gezeigten Messumformer 44 gekoppelt. Über den Messumformer 44 werden in den Temperatursensoren 32, 34 vorliegende elektrische Widerstände gemessen und daraus jeweils ein Temperaturwert ermittelt. Das Gehäuse 40, in dem die Messumformeranbindung 42 mit dem Messumformer 44 aufgenommen ist, durch Öffnen der lösbaren Verbindung 27 zusammen mit der Hülse 30 von der Halterung 28 lösbar ist. Die in FIG 1 gezeigte montierte Temperaturmessvorrichtung 10 stellt den Ausgangszustand und den Endzustand eines Verfahrens 100 zum Kalibrieren der Temperaturmessvorrichtung 10 dar. In einem ersten Schritt 110 des Verfahrens 100 wird das Gehäuse 40 zusammen mit der Hülse 30 von der Halterung 28 gelöst. Ferner ist die in FIG 1 dargestellte Temperaturmessvorrichtung 10 in einem Computerprogrammprodukt 50 abgebildet, durch das das Betriebsverhalten der Temperaturmessvorrichtung 10 simulierbar ist. Das Computerprogrammprodukt 50 ist hierzu als sogenannter Digitaler Zwilling ausgebildet.

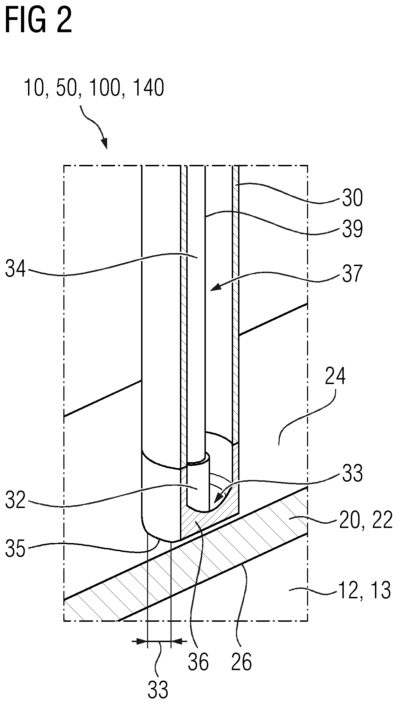

Die erste Ausführungsform der beanspruchten Temperaturmessvorrichtung 10 ist in einer längsgeschnittenen Detailansicht in FIG 2 gezeigt. Zur besseren Übersicht ist die Halterung 28, wie in FIG 1 gezeigt, in FIG 2 nicht abgebildet. In der Hülse 30 ist ein Sensorträger 39 angeordnet, der im Wesentlichen stabförmig ausgebildet ist, und an dem der erste und zweite Temperatursensor 32, 34 angebracht ist. Der erste Temperatursensor 32 ist radial innerhalb des zweiten Temperatursensors 34 positioniert. Ferner ist durch den Sensorträger 39 zwischen dem ersten und zweiten Temperatursensor 32, 34 eine thermisch leitende Verbindung hergestellt. Die Hülse 30 weist an ihrem dem Rohr 20 zugewandten Ende einen Kontaktbereich 35 auf, der im montierten Zustand die Wandung 22 des Rohrs 20 berührt, und somit eine thermisch leitende Verbindung zwischen dem Rohr 20 und der Hülse 30 herstellt. Zum Ausbilden des Kontaktbereichs 35 ist der Abschluss 36 der Hülse 30 abschnittsweise eben und konvex ausgebildet. In Kombination mit der ebenfalls konvexen Wandung 22 wird dadurch der Kontaktbereich 35 definiert, in dem der Abschluss 36 die Wandung 22 berührt, und somit thermisch leitend koppelt. Ferner weist der Abschluss 36 im Bereich der Kontaktfläche 35 einen Abschnitt 33 mit reduzierter Wandstärke auf. Der Abschnitt 33 mit reduzierter Wandstärke ist im Wesentlichen mittig am Abschluss 36, und damit im Kontaktbereich 35, positioniert. Demzufolge liegt durch die reduzierte Wandstärke im entsprechenden Abschnitt 33 und das Berühren der Wandung 22 im Kontaktbereich 35 ein reduzierter Wärmleitwiderstand vor, durch den eine definierter Wärmestrom von der Wandung 22 zur Hülse 30 erlaubt ist. Der erste Temperatursensor 32 ist derart angeordnet, dass dieser wiederum mit dem Kontaktbereich 35 in thermisch leitendem Kontakt steht. Der Wärmestrom von der Wandung 22 in die Hülse 38 erreicht somit in definierter Weise den ersten Temperatursensor 32 und den Sensorträger 39. Der Kontaktbereich 35 verwirklicht das Prinzip einer Wärmebrücke bzw. eines thermischen Fensters.

In der Hülse 30 ist ein nicht näher dargestellter thermischer Isolator 37 aufgenommen, der den Sensorträger 39 umgibt.

Durch den thermischen Isolator 37 wird ein Wärmestrom zwischen dem Sensorträger 39 und der Hülse 30 minimiert. Hierdurch werden thermische Streuverluste durch einen Wärmestrom vom Sensorträger 39 zur Hülse 30 oder Störeinflüsse aus der Umgebung in Form von Wärmeströmen von der Hülse 30 zum Sensorträger 39 unterbunden. Ein Wärmestrom, der den ersten Temperatursensor 32 erreicht, wird durch den Sensorträger 39 im Wesentlichen verlustfrei zum zweiten Temperatursensor 34 geführt. Dadurch, dass der zweite Temperatursensor 34 radial außerhalb des ersten Temperatursensors 32 positioniert ist und die Wärmeleiteigenschaften des Sensorträgers 39 bekannt sind, ist aus Temperaturmesswerten des ersten und zweiten Temperatursensors 32, 34 die Temperatur 13 des Mediums 12 im Rohr 20 ermittelbar. Die in FIG 2 gezeigte Einbausituation für die Hülse 30 stellt sich unter anderem ein, wenn ein vierter Schritt 140 eines Verfahrens 100 zum Kalibrieren der Temperaturmessvorrichtung 10 abgeschlossen ist, also die Hülse 30 wieder auf der nicht gezeigten Halterung 28 montiert ist. Auch die in FIG 2 dargestellte Temperaturmessvorrichtung 10 ist in einem Computerprogrammprodukt 50 abgebildet, das dazu ausgebildet ist, das Betriebsverhalten der Temperaturmessvorrichtung 10 zu simulieren.

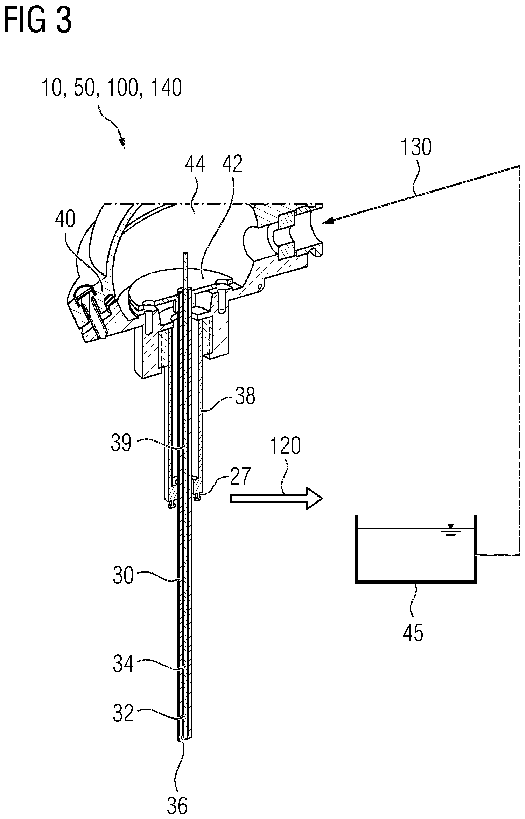

Die erste Ausführungsform der beanspruchten Temperaturmessvorrichtung 10 ist in einem demontierten Zustand in FIG 3 gezeigt. Der in FIG 3 gezeigte demontierte Zustand geht davon aus, dass der erste Schritt 110 des Verfahrens 100 zum Kalibrieren der Temperaturmessvorrichtung 10, wie in FIG 2 gezeigt, bereits durchgeführt ist. Die Temperaturmessvorrichtung 10 umfasst ein Gehäuse 40, in dem ein Messumformer 44 mit einer Messumformeranbindung 42 koppelbar ist. Das Gehäuse 40 ist fest mit einer Anschlusshülse 38 verbunden, die an einem dem Gehäuse 40 angewandten Ende mit einer lösbaren Verbindung 27 versehen ist. Durch die Anschlusshülse 38 erstreckt sich eine Hülse 30, in der ein erster und zweiter Temperatursensor 32, 34 aufgenommen sind, die als Widerstandsthermometer ausgebildet sind. Die Temperatursensoren 32, 34 sind auf einem Sensorträger 39 angeordnet, der auch in der Hülse 30 aufgenommen ist. An einem dem Rohr 20 zugewandten, und damit dem Gehäuse 40 angewandten Ende der Hülse 30 weist diese einen Abschluss 36 auf. Die nach FIG 3 demontierte Temperaturmessvorrichtung 10 wird in einem zweiten Schritt 120 des Verfahrens 100 zum Kalibrieren der Temperaturmessvorrichtung 10 mit der Hülse 30 zumindest teilweise in ein Kalibierbad 45 getaucht. Dementsprechend wird eine Kalibriermessung durchgeführt, durch die Parameter ermittelbar sind, nach denen die Temperaturmessvorrichtung 10 einstellbar ist. Das Einstellen der Temperaturmessvorrichtung 10 in Abhängigkeit hiervon erfolgt in einem dritten Schritt 130 des Verfahrens 100, beispielsweise durch ein manuelles oder maschinell unterstütztes Eingeben am nicht näher gezeigten Messumformer 44. Die skizzierten Schritte 120, 130 sind ebenfalls durch ein Computerprogrammprodukt 50 nachstellbar und gehören ebenfalls zum Betriebsverhalten der Temperaturmessvorrichtung 10.

## Patentansprüche

1. Temperaturmessvorrichtung (10) zum nichtinvasiven Messen einer Temperatur (13) eines Mediums (12) in einem Rohr (20), umfassend eine Hülse (30), die einen Abschluss (36) zu einem Kontaktieren einer Wandung (22) des Rohrs (20) aufweist, wobei eine Außenfläche (35) des Abschlusses (36) der Hülse (30), die zu einem thermischen Kontaktieren der Wandung (22) des Rohrs (20) ausgebildet ist, konvex ist, **dadurch gekennzeichnet, dass** die Temperaturmessvorrichtung (10) einen ersten und zweiten Temperatursensor (32, 34) umfasst, die in der Hülse (30) aufgenommen sind, und der Abschluss (36) der Hülse (30) einen Abschnitt (33) mit einer reduzierten Wandstärke zu einer thermischen Anbindung des ersten Temperatursensors (32) an die Wandung (22) des Rohrs (20) aufweist, wobei die reduzierte Wandstärke geringer ist als eine Wandstärke der Hülse (30) .

2. Temperaturmessvorrichtung (10) nach Anspruch 1, **dadurch gekennzeichnet, dass** die konvexe Außenfläche (35) als einachsig gewölbte Außenfläche (35) oder als synklastische Außenfläche (35) ausgebildet ist.

3. Temperaturmessvorrichtung (10) nach Anspruch 1 oder 2, **dadurch gekennzeichnet, dass** der erste Temperatursensor (32) in einem montierten Zustand den Abschluss (36) der Hülse (30) kontaktiert.

4. Temperaturmessvorrichtung (10) nach einem der Ansprüche 1 bis 3, **dadurch gekennzeichnet, dass** die Hülse (30) in einer vom Rohr (20) im Wesentlichen radial abstehenden Halterung (28) lösbar aufgenommen ist.

5. Temperaturmessvorrichtung (10) nach einem der Ansprüche 1 bis 4, **dadurch gekennzeichnet, dass** in der Hülse (30) ein thermischer Isolator (37) zur Minimierung eines Wärmestroms zwischen dem ersten bzw. zweiten Temperatursensor (32, 34) und der Hülse (30) aufgenommen ist.

6. Temperaturmessvorrichtung (10) nach einem der Ansprüche 1 bis 5, **dadurch gekennzeichnet, dass** der erste und zweite Temperatursensor (32, 34) radial beabstandet an einem Sensorträger (39) befestigt sind.

7. Temperaturmessvorrichtung (10) nach einem der Ansprüche 1 bis 5 oder nach Anspruch 6, **dadurch gekennzeichnet, dass** der erste und zweite Temperatursensor (32, 34) radial beabstandet angeordnet sind und über ein Kopplungsmittel thermisch leitend miteinander verbunden sind.

8. Temperaturmessvorrichtung (10) nach einem der Ansprüche 1 bis 7, **dadurch gekennzeichnet, dass** der erste und zweite Temperatursensor (32, 34) an einem dem Rohr (20) abgewandten Ende fest mit einer Messumformeranbindung (42) verbunden sind.

9. Temperaturmessvorrichtung (10) nach einem der Ansprüche 4 bis 8, **dadurch gekennzeichnet, dass** die Temperatursensoren (32, 34) in einem vom Rohr (20) abgewandten Abschnitt mittelbar oder unmittelbar mit einem Gehäuse (40) verbunden sind, in dem ein Messumformer (44) angeordnet ist, und das Gehäuse (40) lösbar mit der Halterung (28) verbunden ist.

10. Verfahren (100) zum Kalibrieren einer Temperaturmessvorrichtung (10) zu einer nichtinvasiven Temperaturmessung in einem Rohr (20), die ein Gehäuse (40) mit einem Messumformer (42) umfasst, an dem ein erster und zweiter Temperatursensor (32, 34) angeschlossen sind und die in einer Hülse (30) aufgenommen sind, die mit dem Gehäuse (40) verbunden ist, umfassend die Schritte:
a) Lösen des Gehäuses (40) mit der Hülse (30) von einer im Wesentlichen radial vom Rohr (20) abstehenden Halterung (28) ;
b) Zumindest teilweises Eintauchen der Hülse (30) in ein Kalibrierbad (45) und Durchführen einer Kalibriermessung;
c) Einstellen des Messumformers (44) in Abhängigkeit von der Kalibriermessung;
d) Befestigen des Gehäuses (40) mit der Hülse (30) an der Halterung (28);
wobei die Hülse (30) über einen Abschluss (36) verfügt, der im Schritt d) mit einer Wandung (22) des Rohrs (20) in einen thermisch leitenden Kontakt gebracht wird, wobei die Temperaturmessvorrichtung (10) nach einem der Ansprüche 1 bis 9 ausgebildet ist.

11. Computerprogrammprodukt (50) zum Simulieren eines Betriebsverhaltens einer Temperaturmessvorrichtung (10), die zu einer Messung einer Temperatur (13) eines Mediums (12) in einem Rohr (20) auf dem Rohr (20) montiert ist, und das Computerprogrammprodukt (50) Befehle umfasst, die bei einer Ausführung des Computerprogrammprodukt (50) auf einem Computer diesen veranlassen, das Betriebsverhalten der Temperaturmessvorrichtung (10) zu simulieren, wobei die Temperaturmessvorrichtung (10) nach einem der Ansprüche 1 bis 9 ausgebildet ist.

## Claims

1. Temperature measuring device (10) for non-invasively measuring a temperature (13) of a medium (12) in a pipe (20), comprising a sleeve (30), which has a closure (36) for contacting a wall (22) of the pipe (20), wherein an outer surface (35) of the closure (36) of the sleeve (30), which is designed for thermal contacting of the wall (22) of the pipe (20), is convex, **characterised in that** the temperature measuring device (10) comprises a first and second temperature sensor (30, 32), which are accommodated in the sleeve (30), and the closure (36) of the sleeve (30) has a section (33) with a reduced wall thickness for thermal connection of the first temperature sensor (32) to the wall (22) of the pipe (20), wherein the reduced wall thickness is less than a wall thickness of the sleeve (30).

2. Temperature measuring device (10) according to claim 1, **characterised in that** the convex outer surface (35) is designed as a uniaxially curved outer surface (35) or as a synclastic outer surface (35).

3. Temperature measuring device (10) according to claim 1 or 2, **characterised in that** in a mounted state the first temperature sensor (32) contacts the closure (36) of the sleeve (30).

4. Temperature measuring device (10) according to one of claims 1 to 3, **characterised in that** the sleeve (30) is detachably accommodated in a holder (28) protruding substantially radially from the pipe (20).

5. Temperature measuring device (10) according to one of claims 1 to 4, **characterised in that** a thermal insulator (37) for minimising a heat flow between the first or second temperature sensor (32, 34) and the sleeve (30) is accommodated in the sleeve (30).

6. Temperature measuring device (10) according to one of claims 1 to 5, **characterised in that** the first and second temperature sensor (32, 34) are spaced radially apart and fastened to a sensor carrier (39).

7. Temperature measuring device (10) according to one of claims 1 to 5 or according to claim 6, **characterised in that** the first and second temperature sensor (32, 34) are arranged radially spaced apart and are thermally conductively connected to one another via a coupling means.

8. Temperature measuring device (10) according to one of claims 1 to 7, **characterised in that** the first and second temperature sensor (32, 34) are, at an end facing away from the pipe (20), firmly connected to a measuring transducer connection (42).

9. Temperature measuring device (10) according to one of claims 4 to 8, **characterised in that** the temperature sensors (32, 34) are, in a section facing away from the pipe (20), directly or indirectly connected to a housing (40), in which a measuring transducer (44) is arranged, and the housing (40) is detachably connected to the holder (28).

10. Method (100) for calibrating a temperature measuring device (10) for non-invasive temperature measurement in a pipe (20), which comprises a housing (40) with a measuring transducer (42), to which a first and second temperature sensor (32, 34) are connected and which are accommodated in a sleeve (30) that is connected to the housing (40), comprising the steps:
a) detaching the housing (40) with the sleeve (30) from a holder (28) protruding substantially radially from the pipe (20) ;
b) at least partially immersing the sleeve (30) in a calibration bath (45) and carrying out a calibration measurement;
c) adjusting the measuring transducer (44) as a function of the calibration measurement;
d) fastening the housing (40) with the sleeve (30) to the holder (28);
wherein the sleeve (30) has a closure (36) which in step d) is brought into thermally conductive contact with a wall (22) of the pipe (20), wherein the temperature measuring device (10) is designed according to one of claims 1 to 9.

11. Computer program product (50) for simulating an operating behaviour of a temperature measuring device (10), which to measure a temperature (13) of a medium (12) in a pipe (20) is mounted on the pipe (20), and the computer program product (50) comprises commands which when the computer program product (50) is executed on a computer causes said computer to simulate the operating behaviour of the temperature measuring device (10), wherein the temperature measuring device (10) is designed according to one of claims 1 to 9.

## Revendications

1. Dispositif (10) de mesure de la température pour la mesure non invasive d'une température (13) d'un milieu (12) dans un tuyau (20), comprenant un manchon (30), qui a une terminaison (36) de mise en contact avec une paroi (22) du tuyau (20), dans lequel une surface (35) extérieure de la terminaison (36) du manchon (30), qui est constituée pour être en contact thermique avec la paroi (22) du tuyau (20), est convexe, **caractérisé en ce que** le dispositif (10) de mesure de la température comprend un premier et un deuxième capteurs (32, 34) de température, qui sont logés dans le manchon (30), et la terminaison (36) du manchon (30) a une partie (33) d'épaisseur de paroi réduite pour une jonction thermique du premier capteur (32) de température à la paroi (22) du tuyau (20), dans lequel l'épaisseur de paroi réduite est plus petite qu'une épaisseur de paroi du manchon (30).

2. Dispositif (10) de mesure de la température suivant la revendication 1, **caractérisé en ce que** la surface (35) extérieure convexe est constituée sous la forme d'une surface (35) extérieure courbée d'une manière uni-axiale ou d'une surface (35) extérieure de courbure totale positive.

3. Dispositif (10) de mesure de la température suivant la revendication 1 ou 2, **caractérisé en ce que** le premier capteur (32) de température est, dans un état monté, en contact avec la terminaison (36) du manchon (30).

4. Dispositif (10) de mesure de la température suivant l'une des revendications 1 à 3, **caractérisé en ce que** le manchon (30) est logé de manière détachable dans une fixation (28) en saillie sensiblement radialement du tuyau (20).

5. Dispositif (10) de mesure de la température suivant l'une des revendications 1 à 4, **caractérisé en ce que**, dans le manchon (30), est logé un isolant (37) thermique pour minimiser un flux calorifique entre le premier et respectivement le deuxième capteurs (32, 34) de température et le manchon (30).

6. Dispositif (10) de mesure de la température suivant l'une des revendications 1 à 5, **caractérisé en ce que** le premier et le deuxième capteurs (32, 34) de température sont fixés à un support (39) de capteurs en étant à distance radialement.

7. Dispositif (10) de mesure de la température suivant l'une des revendications 1 à 5 ou suivant la revendication 6, **caractérisé en ce que** le premier et le deuxième capteurs (32, 34) de température sont disposés en étant à distance radialement et sont reliés entre eux d'une manière conductrice thermiquement par un moyen d'accouplement.

8. Dispositif (10) de mesure de la température suivant l'une des revendications 1 à 7, **caractérisé en ce que** le premier et le deuxième capteurs (32, 34) de température sont reliés fixement à une jonction (42) de transformateur de mesure à une extrémité non tournée vers le tuyau (20).

9. Dispositif (10) de mesure de la température suivant l'une des revendications 4 à 8, **caractérisé en ce que** les capteurs (32, 34) de température sont, dans une partie non tournée vers le tuyau (20), reliés indirectement ou directement à un boîtier (40), dans lequel est disposé le transformateur (44) de mesure, et le boîtier (40) est assemblé de manière détachable à la fixation (28).

10. Procédé (100) d'étalonnage d'un dispositif (10) de mesure de la température pour une mesure de température non invasive dans un tuyau (20), qui comprend un boîtier (40) avec un transformateur (42) de mesure, auxquels sont raccordés un premier et un deuxième capteurs (32, 34) de température et qui sont logés dans un manchon (30), qui est assemblé au boîtier (40), comprenant les stades :
a) détachement du boîtier (40) avec le manchon (30) d'une fixation (28) en saillie du tuyau (20) d'une manière sensiblement radiale ;
b) immersion au moins partielle du manchon (30) dans un bain (45) d'étalonnage et exécution d'une mesure d'étalonnage ;
c) réglage du transformateur (44) de mesure en fonction de la mesure d'étalonnage ;
d) fixation du boîtier (40) avec le manchon (30) à la fixation (28) ;
dans lequel le manchon (30) dispose d'une terminaison (36) qui, au stade d), est mise en un contact conducteur thermiquement avec une paroi (22) du tuyau (20), dans lequel le dispositif (10) de mesure de la température est constitué suivant l'une des revendications 1 à 9.

11. Produit (50) de programme d'ordinateur pour la simulation d'un comportement de fonctionnement d'un dispositif (10) de mesure de la température, qui, pour la mesure d'une température (13) d'un milieu (12) dans un tuyau (20), est monté sur le tuyau (20), et le produit (50) de programme d'ordinateur comprend des instructions qui, lors de l'exécution du produit (50) de programme d'ordinateur sur un ordinateur, font qu'elles simulent le comportement de fonctionnement du dispositif (10) de mesure de la température, dans lequel
le dispositif (10) de mesure de la température est constitué suivant l'une des revendications 1 à 9.
